# EUROPÄISCHE PATENTSCHRIFT

(11) **EP 0 446 641 B1**
(45) Veröffentlichungstag und Bekanntmachung des Hinweises auf die Patenterteilung: **24.04.1996**
(21) Anmeldenummer: 91102129.3
(22) Anmeldetag: 15.02.1991
(51) Int. Cl.: G05D 1/00, G05D 3/12, B41F 13/00, B41F 33/08

(54) **Positionsregler für die Antriebswellen einer Druckmaschine**
Position controller for the driving shafts of a printing machine
Régulateur de position des arbres de commande d'une imprimante

(30) Priorität: 13.03.1990 US 492935
(43) Veröffentlichungstag der Anmeldung: 18.09.1991
(73) Patentinhaber: Heidelberger Druckmaschinen Aktiengesellschaft, D-69019 Heidelberg (DE)
(72) Erfinder: Jackson, Dale Hiett, Newmarket, NH 03857 (US)
(74) Vertreter: Stoltenberg, Baldo Heinz-Herbert

(56) Entgegenhaltungen:
- DE-U- 8 314 827
- GB-A- 2 149 149
- US-A- 4 227 126
- US-A- 4 691 152
- PATENT ABSTRACTS OF JAPAN Band 7, Nr. 212 (P-224)(1357) 20. September 1983 & JP-A-58 107 914
- PATENT ABSTRACTS OF JAPAN Band 7, Nr. 40 (E-159)(1185) 17. Februar 1983 & JP-A-57 193 988

## Beschreibung

Die vorliegende Erfindung betrifft Positionsregulierung und bezieht sich auf eine Vorrichtung zum Regulieren der Position einer Antriebswelle für den Antrieb eines Druckwerks einer Druckmaschine im Verhältnis zur Position einer anderen Antriebswelle für den Antrieb eines anderen Druckwerks der Druckmaschine während der Beschleunigung der Antriebswellen.

Eine Druckmaschine besteht normalerweise aus mehreren Druckwerken. Bei bestimmten Druckmaschinen hat jedes Druckwerk eine Antriebswelle, welche antriebsmäßig mit einer Abtriebswelle eines Elektromotors für den Antrieb der Antriebswelle des jeweiligen Druckwerks verbunden ist. Ein Geschwindigkeitsregler erzeugt ein Geschwindigkeitssteuersignal zum Steuern der Drehgeschwindigkeit der Abtriebswelle des Elektromotors. Der Geschwindigkeitsregler erzeugt das Geschwindigkeitssteuersignal in Reaktion auf ein Steuerungs Outputsignal von einem Regler. Das Outputsignal von dem Regler wird erzeugt in Reaktion auf ein Signal, welches die tatsächliche Position der Antriebswelle anzeigt, und ein weiteres Signal, welches die tatsächliche Position einer anderen Antriebswelle eines anderen Druckwerks, bekannt als die Hauptantriebswelle, anzeigt.

Die Position der Antriebswelle eines jeden Druckwerks im Verhältnis zur Hauptantriebswelle muß genau gesteuert und eingehalten werden, um die richtige Registereinstellung der verschiedenen Druckwerke beizubehalten. Da die Antriebswelle eines jeden Druckwerks antriebsmäßig mit der Abtriebswelle des betreffenden Elektromotors verbunden ist, muß auch die Position einer jeden Abtriebswelle im Verhältnis zu der Hauptantriebswelle genau gesteuert und eingehalten werden, um die richtige Registereinstellung der verschiedenen Druckwerke beizubehalten. Genaue Registereinstellung der verschiedenen Druckwerke ist erforderlich, um Fehler, wie z.B. fehlerhafte Registerhaltigkeit beim Drucken, Bahnspannungsfehler, Bahn-zu-Bahn-Registerhaltigkeitsfehler und/oder Signaturabschnittfehler zu verhindern.

Es gibt viele Typen von Reglern für das Regulieren der Position einer Antriebswelle im Verhältnis zur Position einer Hauptantriebswelle.
Eine Type ist ein PLL-Regler (phase-locked loop Regler), in welchem das Outputsignal eines Servomechanismus des geschlossenen Regelkreises sich auf den Kurs eines Bezugssignals aufschaltet. Die Phasenstarrheit wird erreicht durch das Vergleichen der Phasen des Outputsignals und des Bezugssignals. Eine etwaige Phasendifferenz zwischen dem Outputsignal und dem Bezugssignal wird in ein Fehlerkorrektursignal umgewandelt. Das Fehlerkorrektursignal dient dazu, das Outputsignal des Servomechanismus des geschlossenen Regelkreises so zu modifizieren, daß es sich auf das Bezugssignal aufschaltet.
Eine weitere Type Regler für das Regulieren der Position einer Antriebswelle im Verhältnis zu der Position einer Hauptantriebswelle ist ein "Synchro"-Regler. In diesem Regler wird ein Drehmelder verwendet, womit die Winkelposition der Antriebswelle in ein dieser entsprechendes elektrisches Output-Signal umgewandelt wird. Die Position der Antriebswelle im Verhältnis zu der Position der Hauptantriebswelle wird in Reaktion auf das elektrische Output-Signals von dem "Synchro"-Regler reguliert.

Bei der Anwendung solch eines PLL-Reglers oder des "Synchro"-Reglers ergibt sich während der Beschleunigung der Druckmaschine ein unerwünschter Positionsfehler zwischen der tatsächlichen Position der Antriebswelle und der tatsächlichen Position der Hauptantriebswelle. Dieser verhältnisbedingte Wellenpositionsfehler bei der Maschinenbeschleunigung ist eine bleibende Abweichung und unerwünscht, da diese sich in Fehler der Registerhaltigkeit im Druck, der Bahnspannung, der Bahn-zu-Bahn-Registerhaltigkeit und/oder des Signaturabschnitts auswirken kann.

Bei der Anwendung eines Reglers mit Open-Loop-Kompensierung könnte der Wert des Wellenpositionsfehlers bei der Beschleunigung der Druckmaschine reduziert oder sogar theoretisch eliminiert werden. Open-Loop-Kompensierung wird oft auch anders genannt, z.B. "Vorschub", "Geschwindigkeitsbezug", und "dp/dt Mitkopplung". Auch wenn ein Regler mit Open-Loop-Kompensierung anfangs den Wert eines Wellenpositionsfehlers reduziert, ist solch ein Regler, langfristig gesehen, einer unerwünschten Veränderung von Komponenten oder Formänderung von Teilen ausgesetzt und muß gewartet werden.

Aus der JP-A-107914 ist eine Schaltung zur Erzeugung eines Beschleunigungs- und Verzögerungsmusters bekannt, die einen Unterschaltkreis aufweist, der durch einen Schaltbaustein (switching circuit) einen dem Schaltbaustein nachgeschalteten ersten Integrator sowie einem dem ersten Integrator nachgeschalteten zweiten Integrator gebildet ist. Die Schrift gibt keinen Hinweise darauf, den Unterschaltkreis als Steuervorrichtung zum Regulieren der Position einer Antriebswelle für den Antrieb eines Druckwerks einer Druckmaschine einzusetzen.

Die Aufgabe der Erfindung ist es, die Mängel des Standes der Technik zu eliminieren.
Nach der vorliegenden Erfindung schließt eine Vorrichtung ein Mittel ein zum Erzeugen eines ersten Positionssignals, welches die gewünschte Position einer Antriebswelle anzeigt, und ein Mittel zum Erzeugen eines zweiten Positionssignals, welches die tatsächliche Position der Antriebswelle anzeigt.

Es wird ein Positionsfehlersignal erzeugt, welches die Differenz zwischen dem ersten und zweiten Positionssignal darstellt. Ein erster Integrator empfängt das Positionsfehlersignal und erzeugt ein erstes Outputsignal in Entsprechung des Integrals des Positionsfehlersignals. Ein zweiter Integrator empfängt das erste Outputsignal von dem ersten Integrator und erzeugt ein zweites Outputsignal in Entsprechung des Integrals des ersten Outputsignals. Ein Steuermittel mit einem Elektromotor reagiert auf das zweite Outputsignal von dem zweiten Integrator und beschleunigt die Antriebswelle.

Eine nach der vorliegenden Erfindung gebaute Vorrichtung eignet sich besonders zum Regulieren der Position einer Antriebswelle eines Druckwerks während dessen Laufgeschwindigkeit erhöht wird. Vorzugsweise wird das zweite Positionssignaal von einem Positionsdrehgeber, welcher mit der Antriebswelle zugeordnet ist, erzeugt. Das erste Positionssignal wird dann von einem Positionsdrehgeber, welcher einer anderen Antriebswelle, bekannt als Hauptantriebswelle, zugeordnet ist, erzeugt. Ein Positionsfehler-Verstärker erfaßt die Differenz zwischen dem ersten und zweiten Positionssignal und erzeugt das Positionsfehlersignal. Das Steuermittel schließt einen Elektromotor ein, dessen Abtriebswelle antriebsmäßig mit der Antriebswelle verbunden ist, und eine Geschwindigkeitssteuerung, welche operativ mit dem Elektromotor verbunden ist. Die Geschwindigkeitssteuerung reagiert auf das zweite Outputsignal von dem zweiten Integrator, um den Elektromotor zu steuern und dabei die Position der Antriebswelle zu regulieren.

Die vorgenannten und andere Merkmale und Vorteile der vorliegenden Erfindung werden durch die folgende Beschreibung der bevorzugten Ausführung im Zusammenhang mit den nachstehend erläuterten beigefügten Zeichnungen dem Fachmann, an den diese Erfindung gerichtet ist, weiter verdeutlicht:
- Fig. 1: ist ein schematischer Aufbauplan einer Druckmaschine mit eingebauter Vorrichtung nach vorliegender Erfindung;
- Fig. 2: ist ein schematischer Aufbauplan eines Teils der Druckmaschine in Fig. 1;
- Fig. 3: ist eine vergrößerte Ansicht eines Wellenpositionsreglers für die Druckmaschine in Fig. 2;
- Fig. 4: ist eine graphische Darstellung der Betriebsstromspannungsniveaus an bestimmten Stellen in dem Wellenpositionsregler in Fig. 3;
- Fig. 5: ist eine graphische Darstellung der Betriebsstromspannungsniveaus an bestimmten Stellen in einem der Fig. 3 ähnlichen, anderen Ausführungsbeispiel des Wellenpositionsreglers; und
- Fig. 6: ist eine Ansicht, ähnlich der in Fig. 3, welche noch eine weitere Ausführung der vorliegenden Erfindung darstellt.

Die vorliegende Erfindung bezieht sich auf eine Vorrichtung zum Regulieren der Position einer Antriebswelle zum Antreiben einer Einheit im Verhältnis zu der Position einer anderen Antriebswelle zum Antreiben einer anderen Einheit während der Beschleunigung der beiden Antriebswellen. Die Anwendung und der Aufbau der Vorrichtung nach der vorliegenden Erfindung können sich ändern. Die Vorrichtung nach vorliegender Erfindung ist jedoch besonders geeignet für die Anwendung in einer Druckmaschine und wird hier beschrieben als sei sie darin verwendet.

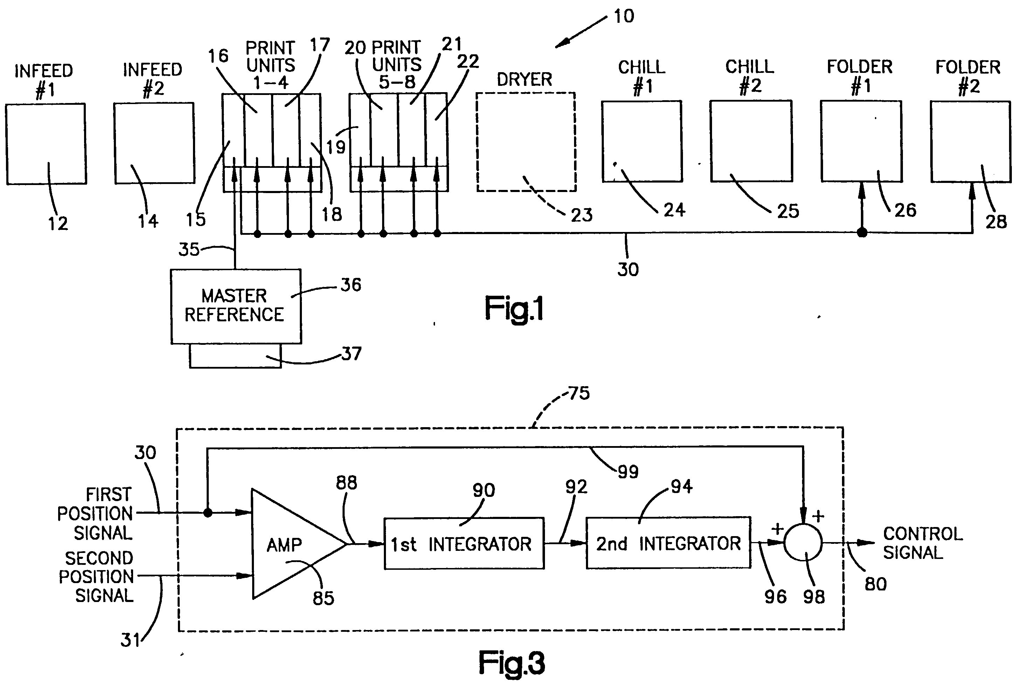

Wie aus Fig. 1 ersichtlich, weist eine Druckmaschine 10 typischerweise eine Anzahl von Einheiten, wie Zuführeinrichtungen, Druckwerke, Trockner, Kühlwalzeneinheiten und Falzeinrichtungen auf. In Fig. 1 sind zwei Zuführeinrichtungen 12, 14, acht Druckwerke 15, 16, 17, 18, 19, 20, 21, 22, ein Trockner 23, zwei Kühlwalzeneinheiten 24, 25 und zwei Falzeinrichtungen gezeigt. Wie dargestellt, sind die sieben Druckwerke 16 bis 22 und die zwei Falzeinrichtungen 26, 28 mit dem Druckwerk 15 verbunden und reagieren auf ein von diesem über die Leitung 30 kommendes Positionssignal. Das Druckwerk 15 ist mit einer Hauptbezugssignalquelle 36 verbunden und reagiert auf ein über die Leitung 35 kommendes Hauptbezugssignal.

Die Hauptbezugssignalquelle 36 hat eine Anzahl manuell bedienbarer Stellknöpfe 37 zum Einstellen des Hauptbezugssignals der Leitung 35. Es versteht sich von selbst, daß die Hauptbezugssignalquelle 36 zur Einstellung des Hauptbezugssignals der Leitung 35 automatisch oder automatisch und manuell bedient werden kann.

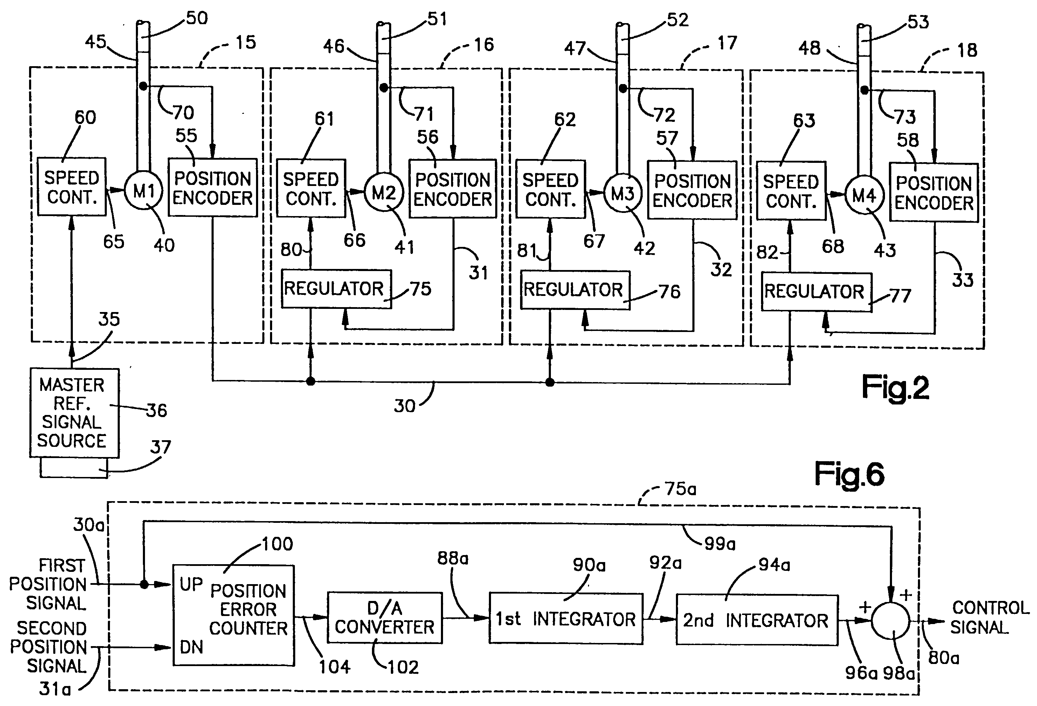

In Fig. 2 sind die vier Druckwerke 15-18 schematisch genauer dargestellt. Die vier Druckwerke 15-18 schließen jeweilige Elektromotoren 40, 41, 42, 43 mit jeweiligen Abtriebswellen 45, 46, 47, 48 ein, welche antriebsmäßig mit jeweiligen Antriebswellen 50, 51, 52, 53 der Druckmaschine 10 verbunden sind. Die Druckwerke 15-18 schließen auch jeweilige Positionsdrehgeber 55, 56, 57, 58 ein, welche operativ mit den zugeordneten Antriebswellen 50, 51, 52, 53 verbunden sind. Die Positionsdrehgeber 55, 56, 57, 58 überwachen jeweils über Leitungen 70, 71, 72, 73 die tatsächlichen Positionen der Antriebswellen 50, 51, 52, 53 und erzeugen jeweils über Leitungen 30, 31, 32, 33, Positionssignale, welche die tatsächliche Position der zugeordneten Antriebswellen 50, 51, 52, 53 andeuten. Ferner schließen die vier Druckwerke 15-18 jeweilige Geschwindigkeitssteuerungen 60, 61, 62, 63 ein, welche über die Leitungen 65, 66, 67, 68 Geschwindigkeitssteuersignale an die zugeordneten Elektromotoren 40, 41, 42, 43 geben. Die Geschwindigkeitssteuerung 60 des Druckwerks 15 erzeugt ihr Geschwindigkeitssteuersignal über Leitung 65 in Reaktion auf das Hauptbezugssignal der Leitung 35 von der Hauptbezugssignalquelle 36.

Die drei Druckwerke 16-18 schließen jeweilige Wellenpositionsregler 75, 76, 77 ein. Diese Regler 75, 76, 77 überwachen das Positionssignal der Leitung 30 von dem Positionsdrehgeber 55 und überwachen jeweils die Positionssignale der Leitung 31, 32, 33 von den zugeordneten Positionsdrehgebern 56, 57, 58. Die Regler 75, 76, 77 erzeugen jeweils über die Leitungen 80, 81, 82 Steuersignale für die zugehörigen Geschwindigkeitsregler 61, 62, 63 in Reaktion auf das Positionssignal der Leitung 30 und auf die Positionssignale der Leitungen 31, 32, 33. Die Beschaffenheit und Funktion der jeweiligen Regler 75, 76, 77 ist die gleiche. Der Einfachheit halber wird die Beschaffenheit und Funktion nur des Reglers 75 für das Druckwerk 16 ausführlich beschrieben.

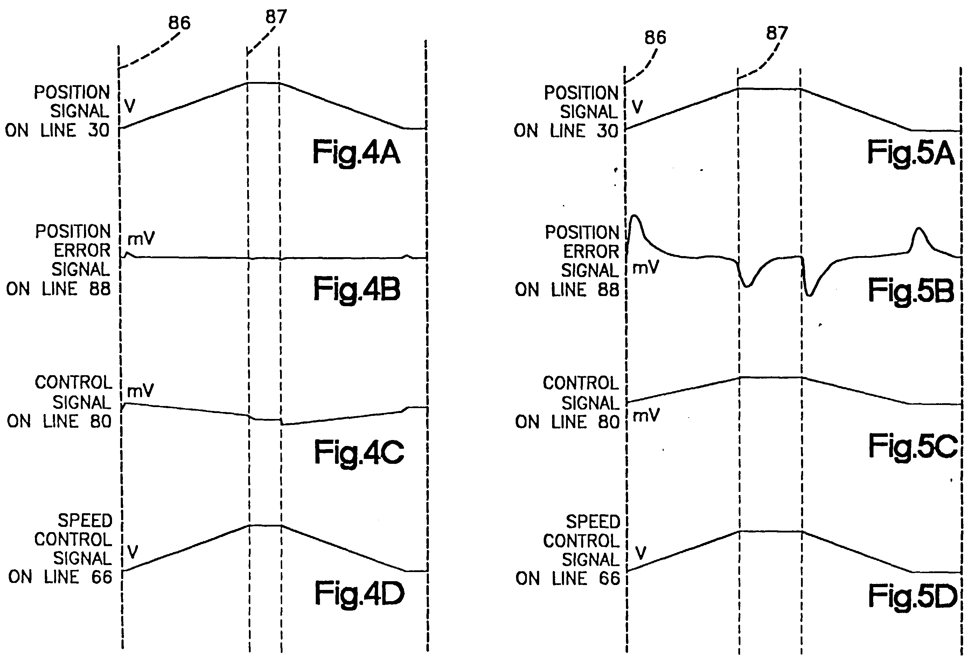

Fig. 3 ist eine ausführliche schematische Darstellung des Reglers 75. Dieser umfaßt einen Positionsfehler-Verstärker 85, dessen einer Input mit dem Positionssignal der Leitung 30 und dessen anderer Input mit dem Positionssignal der Leitung 31 verbunden ist. Das Positionssignal der Leitung 30 deutet die tatsächliche Position für die Antriebswelle 50 an, und das Positionssignal der Leitung 31 deutet die tatsächliche Position der Antriebswelle 51 an. Die gewünschte Position der Antriebswelle 51 ist die tatsächliche Position für die Antriebswelle 50. Der Positionsfehler-Verstärker 85 bearbeitet das Positionssignal den Leitung 30 und das Positionssignal der Leitung 31 und erzeugt ein analoges Outputsignal über die Leitung 88, welches den Positionsfehler zwischen der gewünschten und der tatsächlichen Position der Antriebswelle 51 anzeigt.

Das Positionsfehlersignal der Leitung 88 ist mit dem Input eines ersten Integrators 90 verbunden. Dieser integriert das Positionsfehlersignal der Leitung 88 und gibt ein Outputsignal über die Leitung 92 an den Input eines zweiten Integrators 94. Das Signal der Leitung 92 entspricht dem Integral der Differenz zwischen dem Positionssignal der Leitung 30 von dem Positionsdrehgeber 55 in dem Druckwerk 15 und dem Positionssignal der Leitung 31 von dem Positionsdrehgeber 56 in dem Druckwerk 16. Der zweite Integrator 94 integriert das Signal der Leitung 92 von dem ersten Integrator 90 und gibt ein Outputsignal über die Leitung 96 an eine summierende Anschlußstelle 98. Das Signal der Leitung 96 entspricht dem Integral des Signals der Leitung 92 von dem ersten Integrator 90.

An dem Summierpunkt 98 wird das Signal der Leitung 96 von dem zweiten Integrator 94 zu einem Signal der Leitung 99 summiert, um das Steuersignal der Leitung 80 zu erzeugen. Das Signal der Leitung 99 ist dasselbe wie das Positionssignal der Leitung 30 von dem Positionsdrehgeber 55 in dem Druckwerk 15. Das Summieren des Signals der Leitung 96 von dem zweiten Integrator 94 zu dem Positionssignal der Leitung 30 bewirkt, daß sich der Positionsfehler der Antriebswelle 51 während deren Beschleunigung verringert. Diese spezifische Technique des Verringerung des Positionsfehlers der Antriebswelle 51 während deren Beschleunigung ist im Stand der Technik als OL-Ausgleich oder Mitkoppelung bekannt.

Die Stellknöpfe 37 der Hauptbezugssignalquelle 36 werden auf eine vorbestimmte Stellung eingestellt, um die beiden Antriebswellen 50, 51 von Null auf die vorbestimmte Geschwindigkeit zu beschleunigen. Mit der Einstellung der Stellknöpfe 37 in die vorbestimmte Stellung steigert sich das Hauptbezugssignal der Leitung 35 stetig. Der Geschwindigkeitsregler 60 reagiert auf die stetige Steigerung des Hauptbezugssignals der Leitung 35 und erzeugt ein sich stetig steigerndes Geschwindigkeitssteuersignal über die Leitung 65 zur stetigen Steigerung der Umdrehungsgeschwindigkeit der Abtriebswelle 45 des Motors 40. Während der stetigen Steigerung der Umdrehungsgeschwindigkeit der Abtriebswelle 45 erzeugt der Positionsdrehgeber 55 ein sich stetig steigerndes Positionssignal über die Leitung 30.

Der Regler 75 reagiert auf das sich stetig steigernde Positionssignal der Leitung 30, um ein sich stetig steigerndes Steuersignal über die Leitung 80 zu erzeugen. Der Geschwindigkeitsregler 61 reagiert auf das sich stetig steigernde Steuersignal von der Leitung 80, um ein sich stetig steigerndes Geschwindigkeitssteuersignal über die Leitung 66 zu erzeugen und dabei die Umdrehungsgeschwindigkeit der Abtriebswelle 46 des Motors 41 stetig zu steigern. Während der stetigen Steigerung der Umdrehungsgeschwindigkeit der Abtriebswelle 46 erzeugt der Positionsdrehgeber 56 ein sich stetig steigerndes Positionssignal über die Leitung 31. Der Regler 75 reagiert auch auf das sich stetig steigernde Positionssignal der Leitung 31, um ein sich stetig steigerndes Steuersignal über die Leitung 80 zu erzeugen. Somit wirkt der Regler 75 während der Beschleunigung der Antriebswellen 50, 51 von Null auf die vorbestimmte Geschwindigkeit gleichzeitig auf die sich stetig steigernden Positionssignale der Leitung 30 und der Leitung 31, um das sich stetig steigernde Steuersignal über die Leitung 80 zu erzeugen.

Der Regler 75 erzeugt das sich stetig steigernde Steuersignal über die Leitung 80 und reduziert die Differenz zwischen den sich stetig steigernden Positionssignalen der Leitungen 30 und 31, i .e. das Positionsfehlersignal, während der Beschleunigung der Antriebswellen 50, 51 auf Null. Der zweite Integrator 94 muß über die Leitung 96 ein Beschleunigungsanstiegssignal ausgeben, damit der Regler 75 das sich stetig steigernde Steuersignal von der summierenden Anschlußstelle 98 über die Leitung 80 ausgeben kann. Das Signal der Leitung 92 von dem Integrator 90 muß einen Festwert haben, damit der zweite Integrator 94 ein Beschleunigungsanstiegssignal über die Leitung 96 erzeugen kann, denn das Integral eines Festwert-Signals ist ein Anstiegssignal. Desgleichen muß das Positonsfehlersignal der Leitung 88 von dem Positionsfehlerverstärker 85 einen Nullwert haben, damit der erste Integrator 90 über die Leitung 92 ein Festwertsignal erzeugen kann, denn das Integral eines Wertes von Null ist ein Festwertsignal.

Durch die Tandemanordnung des ersten und zweiten Integrators 90, 94 und das Erstellen des Positionsfehlersignals über die Leitung 88, um das Beschleunigungsanstiegssignal über die Leitung 96 in der oben beschriebenen Art und Weise zu erzeugen, wird das Positionsfehlersignal der Leitung 88 während der Beschleunigung der Antriebswellen 50, 51 von Null-Geschwindigkeit auf die vorbestimmte Geschwindigkeit auf Null reduziert. Da die gewünschte Position der Antriebswelle 51 die gleiche ist, wie die tatsächliche Position der Antriebswelle 50, so ist die tatsächliche Position der Antriebswelle 51 die gleiche, wie die tatsächliche Position der Antriebswelle 50, wenn das Positionsfehlersignal sich auf Null befindet. Indem die tatsächliche Position der Antriebswelle 51 mit der tatsächlichen Position der Antriebswelle 50 während deren Beschleunigung von Null auf die vorbestimmte Geschwindigkeit gleichgehalten wird, sind Fehler, wie Registerhaltigkeitsfehler beim Druck, Bahnspannungsfehler, Bahn-zu-Bahn-Registerhaltigkeitsfehler und/oder Signaturabschnittfehler aufgrund von Wellenpositionsfehlern in den beiden Druckwerken 15, 16 auf ein Minimum reduziert. Somit wirken der erste und der zweite Integrator 90, 94 in dem Regler 75 zusammen, um das Positionsfehlersignal der Leitung 88 auf Null zu reduzieren und es während der Beschleunigung der Antriebswellen 50, 51 auf Null zu halten, um so Druckregisterialtigkeitsfehler, Bahnspannungsfehler, Bahn-zu-Bahn-Registerhaltigkeitsfehler und/oder Signaturabschnittfehler zu minimieren.

Das Steuersignal der Leitung 80 hört auf, sich zu steigern und verflacht auf einem vorbestimmten Niveau, wenn die Antriebswellen 50, 51 die vorbestimmte Geschwindigkeit erreichen. Das Steuersignal der Leitung 80 hört auf, sich zu steigern und verflacht auf einem vorbestimmten Niveau, da der Regler 75 in einem geschlossenen Regelkreis arbeitet, um das Steuersignal in Reaktion auf das Positionssignal der Leitung 30 und das Positionssignal der Leitung 31 über die Leitung 80 zu erzeugen. Die Antriebswellen 50, 51 drehen sich beharrlich mit der vorbestimmten Geschwindigkeit, wobei die Differenz zwischen dem Positionssignal der Leitung 30 und dem Positionssignal der Leitung 31, i.e., das Positionsfehlersignal der Leitung 88, auf einem Nullwert gehalten wird. Das Positionsfehlersignal der Leitung 88 wird somit auf Null reduziert und während der Beschleunigung der Antriebswellen 50, 51 von Null auf eine vorbestimmte Geschwindigkeit und während deren beharrlichem Lauf bei vorbestimmter Geschwindigkeit auf Null gehalten. Das Positionsfehlersignal der Leitung 88 wird während der Beschleunigung und während des Laufs in dem Beharrungszustand auf Null gehalten, weil der erste und zweite Integrator 90, 94 in Tandemanordnung verbunden sind und für die Bearbeitung des Positionsfehlersignals über die Leitung 88 in der hieroben beschriebenen Art und Weise zusammenwirken.

Die Figuren 4A-4D verdeutlichen das Funktionieren des Wellenpositionsreglers 75 mit der Mitkoppelung, i.e. mit dem Signal der Leitung 99, weiter. In den Figuren 4A-4D sind an bestimmten Stellen in dem Wellenpositionsregler 75 Formen von Spannungswellen dargestellt. Im einzelnen zeigt Fig. 4A das Positionssignal der Leitung 30 von dem Positionsdrehgeber 55 in dem Druckwerk 15; Fig. 48 zeigt das Positionsfehlersignal der Leitung 88 in dem Regler 75; Fig. 4C zeigt das Steuersignal der Leitung 80 von dem Regler 75; und Fig. 4D zeigt das Geschwindigkeitssteuersignal der Leitung 66 von dem Geschwindigkeitsregler 61. Der Maßstab der Figuren 4A und 4D ist in "Volt" und der der Figuren 4B und 4C in "Millivolt" gegeben.

Wenn das Positionssignal der Leitung 30 von der gestrichelten Linie 86 zu der gestrichelten Linie 87 sich linear steigert, wie in Fig. 4A gezeigt, so steigert sich das Geschwindigkeitssteuersignal der Leitung 66 ebenfalls linear, wie in Fig. 4D gezeigt, um die Abtriebswelle 46 des Motors 41 zu beschleunigen. Diese, wiederum, beschleunigt die Antriebswelle 51 der Druckmaschine 10. Während der Beschleunigung der Antriebswelle 51 befindet sich das Positionsfehlersignal der Leitung 88 auf Null, wie in Fig. 48 gezeigt, ausgenommen in übergangsperioden. Das Steuersignal der Leitung 80 von dem Wellenpositionsregler 75 hat wegen des Vorhandenseins des Mitkoppelsignals der Leitung 99, welches dasselbe wie das Positionssignal der Leitung 30 ist, ungefähr die in Fig. 4C gezeigte Wellenform.

Die Figuren 5A-5D verdeutlichen das Funktionieren des Wellenpositionsreglers 75 ohne Mitkoppelung, i.e., ohne das Signal der Leitung 99, weiter. In den Figuren 5A-5D sind Formen von Spannungswellen an bestimmten Stellen in dem Wellenpositionsregler 75 dargestellt. Im einzelnen zeigt Fig. 5A das Positionssignal der Leitung 30 von dem Positionsdrehgeber 55 in dem Druckwerk 15, Fig. 5B zeigt das Positionsfehlersignal der Leitung 88 in dem Regler 75, Fig. 5C zeigt das Steuersignal der Leitung 80 von dem Regler 75, und Fig. 5D zeigt das Geschwindigkeitssteuersignal der Leitung 66 von dem Geschwindigkeitsregler 61. Der Maßstab der Figuren 5A und 5D ist in "Volt" und der der Figuren 5B und 5C ist in "Millivolt" gegeben.

Wenn das Positionssignal der Leitung 30 von der gestrichelten Linie 86 zu der gestrichelten Linie 87 sich linear steigert, wie in Fig. 5A gezeigt, steigert sich das Geschwindigkeitssteuersignal der Leitung 66 ebenfalls linear, wie in Fig. 5D gezeigt, um die Abtriebswelle 46 des Motors 41 zu beschleunigen. Dies wiederum beschleunigt die Antriebswelle 51 der Druckmaschine 10. Während der Beschleunigung der Antriebswelle 51 befindet sich das Positionsfehlersignal der Leitung 88 auf Null, wie in Fig. 5B gezeigt, ausgenommen in übergangsperioden. Das Positionsfehlersignal der Leitung 88 nimmt ungefähr die Wellenform an, wie in Fig. 5B gezeigt, und es wird während der Beschleunigung der Antriebswelle 51 auf einem Nullwert gehalten, obwohl das Mitkoppelungssignal nicht in der Leitung 99 vorhanden ist.

Es wird zwar das Positionsfehlersignal der Leitung 88 auf einem Nullwert gehalten, wenn das Mitkoppelungssignal in der Leitung 99 nicht vorhanden ist, aber seine Wellenform ist nicht so glatt wie die Wellenform, wenn das Mitkoppelungssignal in der Leitung 99 vorhanden ist. Der Unterschied in der Glätte der beiden Wellenformen zeigt sich bei dem Vergleich der Fig. 4B mit Fig. 5B. Wenn das Mitkoppelungssignal in der Leitung 99 nicht vorhanden ist, hat die Wellenform des Steuersignals der Leitung 80 von dem Regler 75 ungefähr die Gestalt wie in Fig. 5C gezeigt.

Die Konstruktion und das Funktionieren des Reglers 76 in dem Druckwerk 17 und der Regler 77 in dem Druckwerk 18 sind identisch mit dem Regler 75 in dem Druckwerk 16, wie hieroben beschrieben. Ferner sollte klar sein, daß alle vier Druckwerke 18, 19, 20, 21 und die Falzeinrichtungen 26, 28 einen mit dem Regler 75 in dem Druckwerk 15 identischen Regler einschließen. Die Konstruktion und das Funktionieren der Regler in jedem dieser vier Druckwerke 19, 20, 21, 22 und jedem der Falzeinrichtungen 26, 28 sind identisch mit der Konstruktion und dem Funktionieren des Reglers 75 in dem Druckwerk 16. Das Positionsfehlersignal in jedem dieser Regler wird auf einen Nullwert gebracht und während der Beschleunigung der verbundenen Antriebswellen auf Null gehalten. Dadurch können Fehler, wie z.B. Druckregisterhaltigkeitsfehler, Bahnspannungsfehler, Bahn-zu-Bahn-Registerhaltigkeitsfehler und/oder Signaturabschnittfehler minimiert werden.

Eine Weitere Ausführung der vorliegenden Erfindung wird in Fig. 6 gezeigt. Da die in Fig. 6 dargestellte Ausführung generell der in Fig. 3 dargestellten gleicht, werden gleiche Teile mit den gleichen Ziffern identifiziert, jedoch mit dem Zusatz "a" im Zusammenhang mit der Ausführung nach Fig. 6, um Verwechslungen zu vermeiden.

Wie in Fig. 6 gezeigt, wird darin die Kombination eines Positionsfehlerzählers 100 und eines Digital-/Analogumsetzers 102 verwendet, anstatt des Positionsfehlerverstärkers 85 in der in Fig. 3 gezeigten Ausführung. Das erste Positionssignal der Leitung 30a von dem Positionsdrehgeber 55a erfolgt in Form eines Impulszugsignals. Das zweite Positionssignal der Leitung 31a von dem Positionsdrehgeber 56a erfolgt auch in Form eines Impulszugsignals.

Der Positionsfehlerzähler 100 ist des Typs, welcher nach oben und nach unten zählt. Wie in Fig. 6 gezeigt, ist der Positionsfehlerzähler 100 so verbunden, daß er in Reaktion auf Impulse von dem Impulszug-Positionssignal der Leitung 30a von dem Positionsdrehgeber 55a in dem Druckwerk 15a nach oben zählt, und in Reaktion auf die Impulse von dem Impulszug-Positionssignal der Leitung 31a von dem Positionsdrehgeber 56a in dem Druckwerk 16a nach unten zählt. Durch die Impulsgebung an den Positionsfehlerzähler 100 zum Zählen nach oben und nach unten, wie auch immer, in Reaktion auf das Impulszug-Positionssignal der Leitung 30a und der Leitung 31a, erzeugt der Positionsfehlerzähler 100 ein Outputsignal über die Leitung 104, welches die Differenz zwischen der gewünschten Position der Antriebswelle 51 und ihrer tatäschlichen Position anzeigt. Das Signal der Leitung 104 ist das Positionsfehlersignal; es erfolgt in Digitalform und wird in der Leitung 88a über den Digital-/Analogumsetzer 102 in die Analogform umgewandelt. Der Wellenpositionsregler 75a in Fig. 6 funktioniert auf die gleiche Weise wie der Wellenpositionsregler 75 in der in Fig. 3 gezeigten Ausführung.

## Patentansprüche

1. Steuervorrichtung zum Regulieren der Position einer Antriebswelle für den Antrieb eines Druckwerks einer Druckmaschine, welches folgende Merkmale aufweist:
ein Mittel (55) zum Erzeugen eines ersten Positionssignals (30; 30a), welches die gewünschte Position einer ersten Welle (51) anzeigt;
ein Mittel (56) zum Erzeugen eines zweiten Positionssignals (31; 31a), welches die tatsächliche Position der ersten Welle (51) anzeigt;
Mittel (85; 100, 102) zum Erzeugen eines Positionsfehlersignals (88; 88a), welches die Differenz zwischen dem ersten und zweiten Positionssignal (30, 31; 30a, 31a) anzeigt;
einen ersten Integrator (90; 90a) für den Empfang des Positionsfehlersignals (88; 88a) und zum Erzeugen eines ersten Outputsignals (92; 92a) in Entsprechung des Integrals des Positionsfehlersignals (88; 88a);
einen zweiten Integrator (94, 94a) für den Empfang des ersten Outputsignals (92; 92a) von dem genannten ersten Integrator( 90; 90a) und zum Erzeugen eines zweiten Outputsignals (96; 96a) in Entsprechung des Integrals des ersten Outputsignals (92; 92a);
Mittel (98, 99; 98a, 99a) zum Erzeugen eines dritten Outputsignals (80; 80a) in Entsprechung der Summe des ersten Positionssignals (30; 30a) und des zweiten Outputsignals (96; 96a) von dem genannten zweiten Integrator(94; 94a); und
Steuermittel (41, 61), welche in Reaktion auf das dritte Outputsignal (80, 80a) die Geschwindigkeit der ersten Welle (51) steigern.

2. Steuervorrichtung nach Anspruch 1,
**dadurch gekennzeichnet,**
daß das genannte Mittel zum Erzeugen des ersten Positionssignals (30; 30a) einen ersten Positionsdrehgeber (55) einschließt, der operativ mit einer zweiten Welle (50) verbunden ist, zum Erzeugen des ersten Positionssignals (30; 30a), welches die tatsächliche Position der zweiten Welle (50) anzeigt.

3. Steuervorrichtung nach Anspruch 1 oder 2,
**dadurch gekennzeichnet,**
daß das Mittel zum Erzeugen des zweiten Positionssignals (31; 31a) einen zweiten Positionsdrehgeber (56) einschließt, der operativ mit der ersten Welle (51) verbunden ist, zum Erzeugen des zweiten Positionssignals (31; 31a).

4. Steuervorrichtung nach einem der vorhergehenden Ansprüche,
**dadurch gekennzeichnet,**
daß das Mittel zum Erzeugen des Positionsfehlersignals (88) einen Positionsfehlerverstärker (85) einschließt, welcher die Differenz zwischen dem ersten und zweiten Positionssignal (30, 31) ermittelt.

5. Steuervorrichtung nach einem der Ansprüche 1 bis 3,
**dadurch gekennzeichnet,**
daß das genannte Mittel zum Erzeugen des Positionsfehlersignals (88a) einen Zweirichtungszähler (100) einschließt, welcher in Reaktion auf das erste Positionssignal (30a) in die eine Richtung, und in Reaktion auf das zweite Positionssignal (31a) in die andere Richtung zählt.

6. Steuervorrichtung nach einem der vorhergehenden Ansprüche,
**dadurch gekennzeichnet,**
daß die genannten Steuermittel einen Motor (41) mit einer Abtriebswelle (46) sowie eine Geschwindigkeitssteuereinrichtung (61) zur Steuerung der Umdrehungsgeschwindigkeit der Antriebswelle (46) des Motors (41) in Reakion auf das dritte Outputsignal (80; 80a) einschließen.

7. Steuervorrichtung nach einem der vorhergehenden Ansprüche,
**dadurch gekennzeichnet,**
daß die Mittel zum Erzeugen des dritten Outputsignals (80; 80a) ein Summationsglied (98; 98a) enthalten, welchem das erste Positionssignal (30; 30a) über eine Leitung (99; 99a) zugeführt wird.

## Claims

1. Control apparatus for regulating the position of a drive shaft for driving a printing unit of a printing device, which printing unit has the following features:
a means (55) for generating a first position signal (30; 30a) which indicates the desired position of a first shaft (51);
a means (56) for generating a second position signal (31; 31a) which indicates the actual position of the first shaft (51);
means (85; 100, 102) for generating a position error signal (88; 88a) which indicates the difference between the first and second position signal (30, 31; 30a, 31a);
a first integrator (90; 90a) for receiving the position error signal (88; 88a) and for generating a first output signal (92; 92a) corresponding to the integral of the position error signal (88; 88a);
a second integrator (94, 94a) for receiving the first output signal (92; 92a) from said first integrator (90; 90a) and for generating a second output signal (96; 96a) corresponding to the integral of the first output signal (92; 92a);
means (98, 99; 98a, 99a) for generating a third output signal (80; 80a) corresponding to the sum of the first position signal (30; 30a) and of the second output signal (96; 96a) from said second integrator (94; 94a); and
control means (41, 61) which increase the speed of the first shaft (51) in response to the third output signal (80, 80a).

2. Control apparatus according to Claim 1, characterized in that said means for generating the first position signal (30; 30a) includes a first position encoder (55) which is operatively connected to a second shaft (50) for generating the first position signal (30; 30a) which indicates the actual position of the second shaft (50).

3. Control apparatus according to Claim 1 or 2, characterized in that the means for generating the second position signal (31; 31a) includes a second position encoder (56), which is operatively connected to the first shaft (51), for generating the second position signal (31; 31a).

4. Control apparatus according to one of the preceding claims, characterized in that the means for generating the position error signal (88) includes a position error amplifier (85) which determines the difference between the first and second position signal (30, 31).

5. Control device according to one of Claims 1 to 3, characterized in that said means for generating the position error signal (88a) includes a bidirectional counter (100) which counts in one direction in response to the first position signal (30a) and in the other direction in response to the second position signal (31a).

6. Control apparatus according to one of the preceding claims, characterized in that said control means include a motor (41) having an output shaft (46) and a speed control device (61) for controlling the rotational speed of the drive shaft (46) of the motor (41) in response to the third output signal (80; 80a).

7. Control apparatus according to one of the preceding claims, characterized in that the means for generating the third output signal (80; 80a) contain a summing element (98; 98a) to which the first position signal (30; 30a) is fed via a line (99; 99a).

## Revendications

1. Dispositif de commande pour le réglage de la position d'un arbre de commande destiné à la commande d'un groupe d'impression d'une machine à imprimer, qui a les caractéristiques suivantes :
un moyen (55) de génération d'un premier signal de position (30 ; 30a) qui annonce la position souhaitée d'un premier arbre (51) ;
un moyen (56) de génération d'un second signal de position (31 ; 31a) qui annonce la position réelle du premier arbre (51) ;
des moyens (85 ; 100, 102) de génération d'un signal d'erreur de position (88 ; 88a) qui annonce la différence entre le premier et le second signal de position (30, 31 ; 30a, 31a) ;
un premier intégrateur (90 ; 90a) de réception du signal d'erreur de position (88 ; 88a) et de génération d'un premier signal de sortie (92 ; 92a) qui correspond à l'intégrale du signal d'erreur de position (88 ; 88a) ;
un second intégrateur (94, 94a) de réception du premier signal de sortie (92 ; 92a) émis par ledit premier intégrateur (90 ; 90a) et de génération d'un deuxième signal de sortie (96 ; 96a) qui correspond à l'intégrale du premier signal de sortie (92 ; 92a) ;
des moyens (98, 99 ; 98a, 99a) de génération d'un troisième signal de sortie (80 ; 80a) qui correspond à la somme du premier signal de position (30 ; 30a) et du deuxième signal de sortie (96 ; 96a) émis par ledit second intégrateur (94 ; 94a) ; et
des moyens de commande (41, 61) qui élèvent la vitesse du premier arbre (51) en réaction au troisième signal de sortie (80, 80a).

2. Dispositif de commande selon la revendication 1,
caractérisé
en ce que ledit moyen de génération du premier signal de position (30 ; 30a) comprend un premier capteur de position angulaire (55) qui est relié fonctionnellement à un second arbre (50) pour la génération du premier signal de position (30 ; 30a) qui annonce la position réelle du second arbre (50).

3. Dispositif de commande selon la revendication 1 ou 2,
caractérisé
en ce que le moyen de génération du second signal de position (30 ; 30a) comprend un second capteur (56) de position angulaire qui est relié fonctionnellement au premier arbre (51) pour la génération du second signal de position (31 ; 31a).

4. Dispositif de commande selon l'une des revendications précédentes,
caractérisé
en ce que le moyen de génération du signal d'erreur de position (88) comprend un amplificateur (85) d'erreur de position qui détermine la différence entre le premier et le second signal de position (30, 31).

5. Dispositif de commande selon l'une des revendications 1 à 3,
caractérisé
en ce que ledit moyen de génération du signal d'erreur de position (88a) comprend un compteur bidirectionnel (100) qui compte dans un sens en réaction au premier signal de position (30a) et dans l'autre sens en réaction au second signal de position (31a).

6. Dispositif de commande selon l'une des revendications précédentes,
caractérisé
en ce que lesdits moyens de commande comprennent un moteur (41) équipé d'un arbre d'entraînement (46) ainsi qu'un dispositif de commande de vitesse (61) pour la commande de la vitesse de rotation de l'arbre d'entraînement (46) du moteur (41) en réaction au troisième signal de sortie (80 ; 80a).

7. Dispositif de commande selon l'une des revendications précédentes,
caractérisé
en ce que les moyens de génération du troisième signal de sortie (80 ; 80a) comprennent un élément sommateur (98 ; 98a) sur lequel le premier signal de position (30 ; 30a) est dirigé par un conducteur (99 ; 99a).
